# EUROPEAN PATENT SPECIFICATION

(11) **EP 1 184 709 B1**
(45) Date of publication and mention of the grant of the patent: **10.12.2003**
(21) Application number: 00830551.8
(22) Date of filing: 31.07.2000
(51) Int. Cl.: G02C 5/22

(54) **Spectacle-frame**
Brillenfassung
Monture de lunettes

(43) Date of publication of application: 06.03.2002
(73) Proprietor: M.M. Evolution S.R.L., 21040 Venegono Inferiore, Varese (IT)
(72) Inventor: Mauri, Stefano, 21040 Venegono Inferiore, Varese (IT)
(74) Representative: Tansini, Elio Fabrizio

(56) References cited:
- EP-A- 0 495 767
- WO-A-90/01718
- WO-A-94/29763
- FR-A- 2 626 682
- US-A- 4 978 209
- US-A- 5 594 511

## Description

The present invention relates to a spectacle-frame (in the following also "frames" for the sake of brevity) comprising the features set out in the preamble of claim 1.

It is known that frameworks for eyeglasses usually comprise a lens-holding structure and two support legs each of which is rotatably connected with the lens-holding structure through a hinge connection. Usually, each hinge connection comprises a first hinged portion rigidly in engagement with the lens-holding structure and a second hinged portion rigidly in engagement with the respective support leg. Each hinged portion has a through hole which is coincident with the through hole of the other portion so that together they define an articulation housing for engagement of a hinge pin.

Hinge connections of the above described type, projecting from the frames and directly visible thereon, undesirably affect the aesthetic quality of glasses. In an attempt to overcome this problem, the hinged portions are integrated in one piece into the lens-holding structure and the respective support legs, so that they are as much as possible concealed.

However, since the hinge pin must engage the through holes of the hinged portions by insertion from the outside, achievement of a surface of homogeneous structure is impossible. In fact, at least one hole corresponding to the articulation housing can be seen on the frames structure, causing a disagreeable aesthetic effect.

Frames of the type comprising hinge pins mounted rigidly to either of the lens holding structure and a respective one of the support legs are known e.g. from EP 0 495 767 A1 or WO 94/29763A.

In addition, known frames have problems concerning material recycling. In more detail, separation of the hinge pins, usually made of metal material, from the frames generally made of plastic material is of difficult accomplishment.

The Applicant has further found that known frames can also be improved in terms of practical use and easy assembling/disassembling of the components as well as in terms of production times and costs.

It is an aim of the present invention to solve the problems found in the known art by providing frames that are aesthetically agreeable, of easy recycling, and adapted to be manufactured at reduced production costs.

The above and still further aims that will become more apparent in the course of the following description are substantially achieved by a framework for eyeglasses comprising the features set out in the characterizing portion of claim 1.

Further features and advantages will be best understood from the detailed description of a preferred, but not exclusive, embodiment of a framework for eyeglasses in accordance with the present invention. This description will be taken hereinafter with reference to the accompanying drawing given by way of non-limiting example, in which:
- Fig. 1 is a perspective view of a framework for eyeglasses in accordance with the present invention, in a first embodiment;
- Fig. 2 is a fragmentary perspective view of the framework for eyeglasses seen in Fig. 1, to an enlarged scale;
- Fig. 3 is a perspective view to an enlarged scale of a detail of the frames in a second embodiment;
- Fig. 4 is a perspective view of an enlarge detail of the frames in a third embodiment;
- Fig. 5 is an enlarged perspective view of a detail of the frames in a fourth embodiment;
- Fig. 6 is a further perspective view to an enlarged scale of a detail of the frames in a fifth embodiment;
- fig. 7 is an enlarged perspective view of a detail of the frames in a sixth embodiment.

With reference to the drawings, a framework for eyeglasses in accordance with the present invention has been generally identified by reference numeral 1.

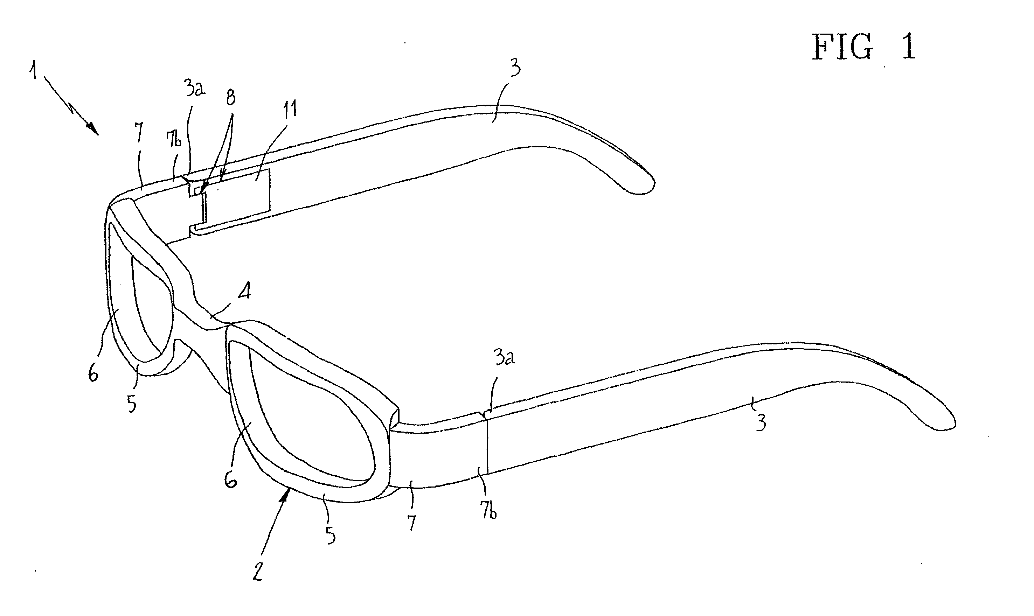

As viewed from Fig. 1, frames 1 comprise a lens-holding structure 2 to which two support legs 3 are rotatably connected. The lens-holding structure 2 has a central rest portion 4, suitable to fit the user's nasal septum, from which two frame-like portions 5 in opposition to each other extend, to define holding seatings 6 for respective lenses (not shown).

Extending from each frame-like portion 5 and at an opposite position relative to the central rest portion 4 is a side support shoulder 7 engaging, through connecting means 8, the respective support leg 3. In known manner, each leg 3 is movable between a closed condition in which it substantially lies in a plane parallel to the lying plane of the glass-holding structure 2 and an open condition in which it lies in a plane substantially perpendicular to the lying plane of the lens-holding structure 2.

The connecting means 8 comprises, for each support leg 3, at least one hinge pin 9 and at least one articulation seating 10 to be rotatably engaged by the hinge pin 9. In more detail, for each support leg 3 two hinge pins 9 are preferably provided and for each side support shoulder 7 two articulation seatings 10 are preferably provided.

Each articulation seating 10 is defined by a first engagement portion 10a formed in frames 1 and a second engagement portion 10b formed in a covering element 11 to be fastened to the frames themselves, preferably within a recess 12 defined by said frames.

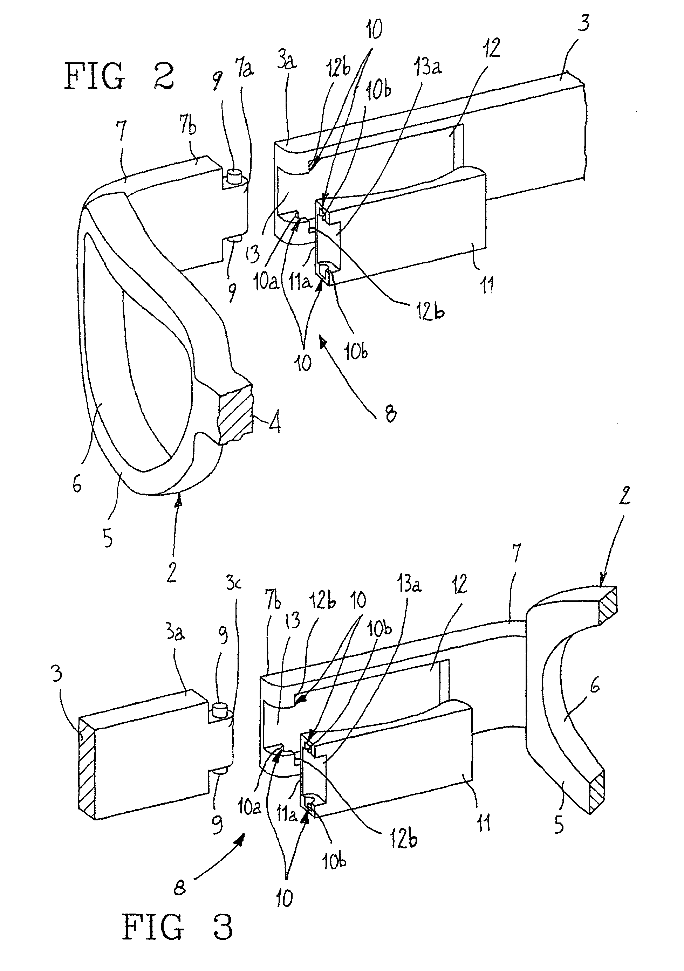

As viewed from Fig. 2, in a first embodiment, the hinge pins 9 are made unitary with the respective side support shoulder 7 and project externally thereof. More specifically, the hinge pins 9 project upwardly in a substantially vertical direction and downwardly from a coupling lug 7a jutting out in the extension of an end portion 7b of the respective side support shoulder 7.

The first engagement portions 10a of the respective articulation seatings 10 are formed in respective shoulders 12b defined within the recess 12 provided in the support leg 3. In detail, shoulders 12b are placed at an end 3a of the respective support leg 3 and lie in a plane substantially normal to the support leg itself.

Formed on the covering element 11 and more particularly along a perimetric edge 11a of the latter, are the second engagement portions 10b to be coupled with the respective first engagement portions 10a to define the respective articulation seatings 10.

When frames 1 are assembled, the coupling lug 7a of each lea 3 is fitted in a locating cavity 13 formed in the extension of recess 12 between the shoulders 12a carrying the first engagement portions 10a, and terminates at a seating 13a defined in the perimetral edge 11a of the covering element 11 carrying the second engagement portions 10b.

With reference to Fig. 3, a second embodiment is therein shown in which, as compared with the embodiment in Fig. 2, positioning of the components of the connecting means 8 carried by legs 3 and the glass-holding structure 2 respectively, are mutually exchanged. In fact, the hinge pins 9 are unitary with the respective support legs 3 whereas the recess 12 provided with the articulation seatings 10 is defined in the lens-holding structure 2.

Under this situation, the hinge pins 9 project externally of a coupling protrusion 3c carried by an end portion 3a of the respective support leg 3, whereas the first engagement portions 10a are formed in at least one shoulder 12b defined in the recess 12 provided in the side support shoulder 7.

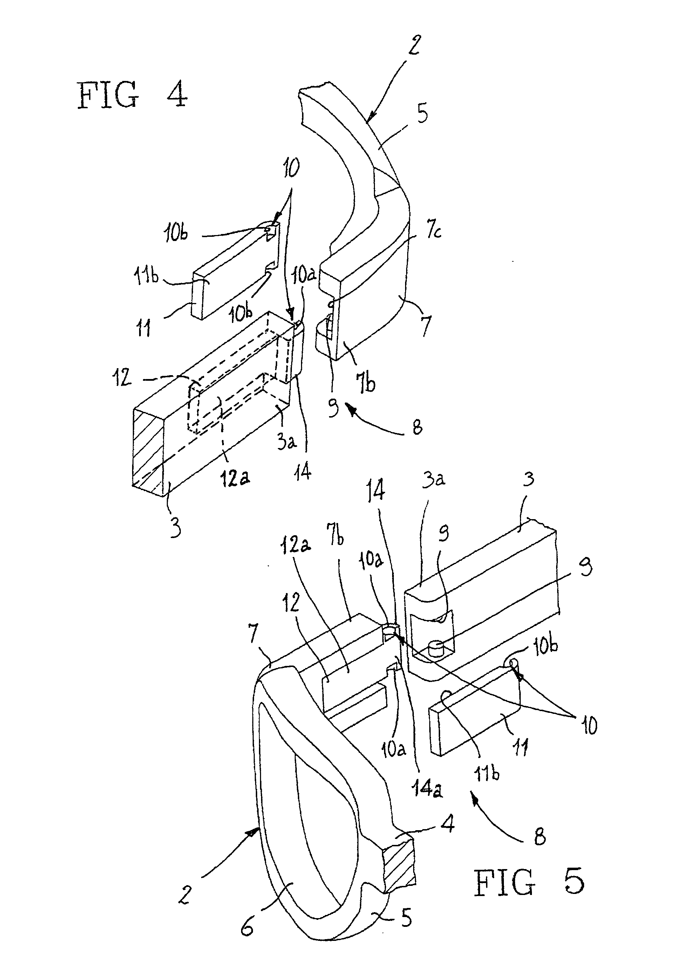

In accordance with a third solution shown in Fig. 4, the connecting means 8 comprises two hinge pins 9 of one piece construction with the respective side support shoulder 7. More specifically, the hinge pins 9 project from opposite inner walls of a respective indentation 7c present in the side support shoulder 7.

The connecting means 8 further comprises two articulation seatings 10 the first engagement portions 10a of which are formed in a contact surface 14a (not shown in Fig. 4) of an engagement lug 14 carried at the end by the respective support leg 3. Preferably, the contact surface 14a of the engagement lug 14 extends in a plane substantially parallel to leg 3 in the open condition, in a coplanar relationship with, and in the extension of, a bottom wall 12a of the recess 12 adapted to engage the respective covering element 11.

Unlike the embodiments shown in Figs. 1 to 3, the second engagement portions 10b are formed in an inner side 11b of the covering element 11 facing the bottom wall 12a of the recess 12.

When the covering element 11 is engaged in recess 12, the inner side 11b acts in abutment against the bottom wall 12a and the contact surface 14a of the engagement lug 14, thereby defining the articulation seatings 10 through the first and second engagement portions 10a, 10b.

Shown in Fig. 5 is a fourth embodiment of the present invention which is very similar to the preceding embodiment, in which however positioning of the components of the connecting means 8 associated with the lens-holding structure 2 and legs 3 respectively, is inverted. In more detail, the hinge pins 9 are associated with the support legs 3 within the respective indentations 7c and the articulation seatings 10 are associated with the side support shoulder 7. In this case, as clearly shown in Fig. 5, the engagement lug 14 juts out in cantilevered fashion from the respective side support shoulder 7 in the direction of the respective support leg 3, and the contact surface 14a thereof extends without interruption from the bottom wall 12a of recess 12 defined in the side shoulder 7 to receive the covering element 11 carrying the second engagement portions 10b on its inner side 11b facing the bottom wall 12a.

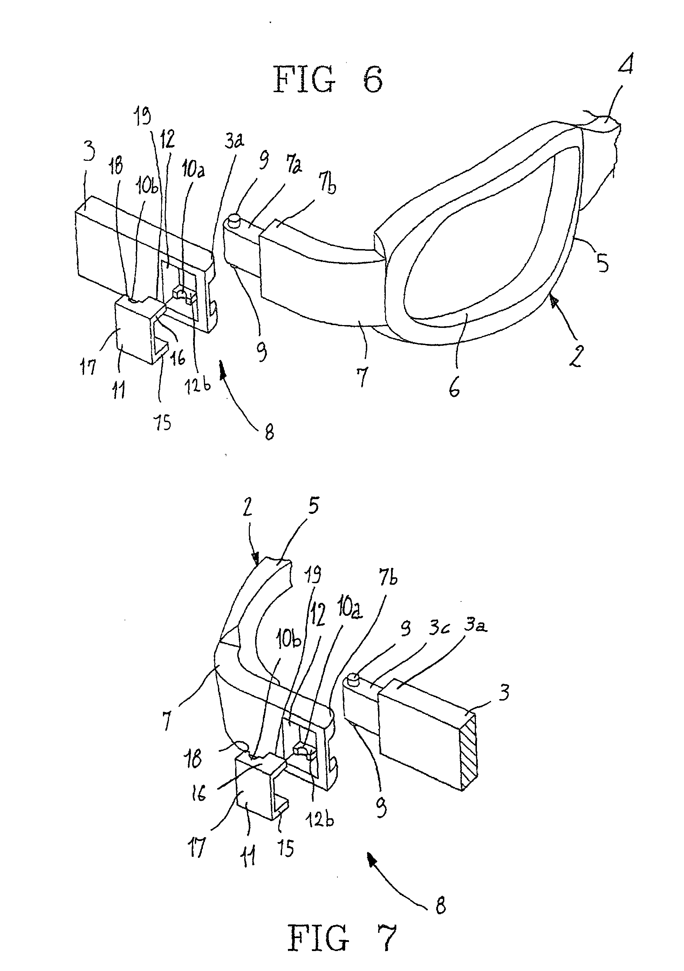

As shown in Fig. 6, in a fifth embodiment of the present invention the hinge pins 9 are associated with the respective side support shoulders 7 and the articulation seatings 10 are formed in the support legs 3. In particular, the hinge pins 9 are disposed in the same manner as described with reference to the first embodiment shown in Figs. 1 and 2, i.e. projecting in a vertical direction from a coupling lug 7a placed in the end portion 7b of the respective side support shoulder 7.

The locating recesses 12 are each defined by a through opening of a substantially quadrangular shape essentially extending perpendicular to the extension of the respective support leg 3. One or more shoulders 12b project within each recess 12, in a plane substantially parallel to the longitudinal extension of leg 3 in an open condition, and formed at said shoulders 12 are the first engagement portions 10a of the articulation seatings 10.

The covering element 11 seen in cross section shows a substantially C-shaped profile defined by a lower portion 15, an upper portion 16, and a connecting side portion 17 interposed between the lower portion 15 and upper portion 16. More specifically, both the lower portion 15 and upper portion 16 have an abutment side edge of irregular profile provided with a first step 18 in which the second engagement portion 10b of the articulation seating 10 is formed and with a second substantially flat step 19 extending a greater distance from the connecting side portion 17 than step 18.

When the covering element 11 is engaged in recess 12, the first step of the lower and upper portions 15, 16 is in abutment against the respective shoulder 12b placed within the recess 12. In this condition the first and second engagement portions 10a, 10b define the articulation seating 10 for the respective hinge pin 9.

Shown in Fig. 7 is a sixth embodiment similar to the fifth one in which positions of the hinge pins 9 and articulation seatings 10 are inverted.

The present invention solves all problems found in the known art and achieves the intended purposes.

First of all, the frames in accordance with the invention are aesthetically improved due to the presence of the connecting means 8 performing their hinge function between the lens-holding structure 2 and the support legs 3, while surface homogeneity and matching shapes are maintained in said frames 1 seen as a whole. In other words, the connecting means 8 enables the aesthetically-unpleasant surface holes to be eliminated while completely concealing the hinge pins 9 to sight. Consequently, this connecting means 8 enables a wide design freedom as regards the aesthetic shapes of the frames.

In addition, the concerned frames can be assembled and/or disassembled in an easy and practical manner. In this connection it is to be pointed out that in each of the proposed embodiments due to the construction conception of the connecting means 8, when the support leg 3 is oriented in the closed condition in the absence of the respective covering element 11, said leg can be freely moved in a longitudinal and/or transverse direction to cause engagement and disengagement of pins 9 with and from the first engagement portions 10a. Once the covering element 11 has been fitted in the respective recess 12 and fastened thereto, by restrained fixing or gluing for example, leg 3 is definitively linked to pins 9. Preferably, as provided in each of the above-discussed embodiments, when leg 3 is in the open condition the first engagement portions 10a define an undercut giving rise to a steady link with the hinge pins 9. In other words, each leg 3 when it is in the open condition can remain steadily linked to the lens-holding structure 2 even in the absence of the respective covering element 11. Due to this condition there is the absence of any sort of stress on the covering elements 11 during normal use of the glasses, for the benefit of a simple and reliable connection of legs 3.

Also to be noted is the fact that all components of the concerned frames can be advantageously made of injection-moulded plastic material. Since manufacture of the frames components and assembling of same can be optimized, the production costs of eyeglasses in general are consequently reduced.

## Claims

1. A spectacle-frame comprising:
- a lens-holding structure (2);
- two support legs (3) in engagement with the lens-holding structure (2) and movable between a closed condition in which they lie in a plane substantially parallel to the lying plane of the lens-holding structure (2) and an open condition in which they lie in planes substantially perpendicular to the lying plane of the lens-holding structure (2);
- connecting means (8) operatively interposed between each support leg (3) and the lens-holding structure (2) to ensure a junction therebetween;
**characterized in that** the connecting means (8) for each support leg (3) comprises:
- at least one hinge pin (9) mounted rigidly with one of the lens holding structure (2) and the support leg (3);
- at least one articulation seating (10) for rotatable engagement of the hinge pin (9), which seating is defined by a first engagement portion (10a) formed in the other of said lens holding structure (2) and said support leg (3) and a second engagement portion (10b) formed in a covering element (11) to be associated with said other of said lens holding structure (2) and said support leg (3)

2. A spectacle-frame as claimed in claim 1, wherein each hinge pin (9) is associated with the lens-holding structure (2) and the first engagement portion (10a) of each articulation seating (2) is formed in the respective support leg (3).

3. A spectacle-frame as claimed in claim 2, wherein each hinge pin (9) projects externally of a coupling lug (7a) carried by an end portion (7b) of the lens-holding structure (2), and the first engagement portion (10a) of each articulation seating (10) is formed in a recess (12) defined in the respective support leg (3) for housing of the covering element (11).

4. A spectacle-frame as claimed in claim 3, wherein in each support leg (3) the recess (12) is defined by a through opening and the first engagement portion (10a) is formed in a shoulder projecting in said through opening in a plane substantially parallel to the longitudinal extension of the respective support leg (3).

5. A spectacle-frame as claimed in claim 2, wherein each hinge pin (9) projects from at least one inner wall of an indentation (7c) formed in the lens-holding structure (2), and the first engagement portion (10b) of the respective articulation seating (10) is formed in a contact surface (14a) of an engagement lug (14) carried at the end by the corresponding support leg (3), the contact surface (14a) of the engagement lug (14) extending in the extension of a bottom wall (12a) of a recess (12) formed in the support leg (3) for engagement of the covering element (11).

6. A spectacle-frame as claimed in claim 1, wherein each hinge pin (9) is associated with the respective support leg (3) and the first engagement portion (10a) of each articulation seating (10) is formed in the lens-holding structure (2).

7. A spectacle-frame as claimed in claim 6, wherein each hinge pin (9) projects externally of an engagement lug (14) disposed at an end portion (3a) of the respective support leg (3), and the first engagement portion (10a) of each articulation seating (10) is formed in a recess (12) defined in the lens-holding structure (2) for housing of the covering element (11).

8. A spectacle-frame as claimed in claim 7, wherein each recess (12) is defined by at least one through opening and the first engagement portion (10a) of the articulation seating (10) is formed in a shoulder (12b) projecting in said through opening in a plane substantially parallel to the longitudinal extension of the respective support leg (3) in the open condition.

9. A spectacle-frame as claimed in claim 6, wherein each hinge pin (9) projects from at least one inner wall of a recess formed in the support leg (3) and the first engagement portion (10b) of the respective articulation seating (10) is formed in a contact surface (14a) of an engagement lug (14) carried at the end by the lens-holding structure (2), the contact surface (14a) of the engagement lug (14) extending in the extension of a bottom wall (12a) of a recess (12) formed in the lens-holding structure (2) for engagement of the covering element (11).

10. A spectacle-frame as claimed in claim 1, wherein said first engagement portion (10a) is formed at a recess (12) arranged in the said other of said lens holding structure (2) and said support leg (3) for housing the covering element (11).

11. A spectacle-frame as claimed in claim 10, wherein said first engagement portion (10a) is formed in a shoulder (12b) defined within said recess (12) in a plane substantially perpendicular to the support leg (3) in an open condition, said second engagement portion (10b) being formed on a perimetric edge (11a) of the covering element (11).

12. A spectacle-frame as claimed in claim 10, wherein said first engagement portion (10a) is formed in a contact surface (14a) of an engagement lug (14) extending in a plane substantially parallel to the support leg (3) in an open condition, in the extension of a bottom wall (12a) of said recess (12), said second engagement portion (10a) being formed on an inner side (11b) of the covering element (11) facing said bottom wall (12a).

13. A spectacle-frame as claimed in claim 10, wherein said first engagement portion (10a) is formed in a shoulder (12b) defined within said recess (12) in a plane substantially parallel to the support leg (3) in an open condition, said second engagement portion (10b) being formed on a side edge (18, 19) of the covering element (11).

14. A spectacle-frame as claimed in claim 1, wherein said first engagement portion (10a) defines an undercut in said other of said lens holding structure (2) and said support leg (3) for steady engagement of the hinge pin (9) when the respective support leg (3) is in the open condition.

## Patentansprüche

1. Brillenfassung umfassend:
- einen Linsentragaufbau (2);
- zwei Stützbügel (3), die am Linsentragaufbau (2) angreifen und zwischen einer Schließstellung, in der sie im wesentlichen gemäß einer zur Ebene, in welcher der Linsentragaufbau (2) liegt, parallel liegen und einer Offenstellung beweglich sind, in der sie gemäß im wesentlichen zur Ebene, in welcher der Linsentragaufbau (2) liegt, senkrecht liegen;
- Verbindungsmittel (8), die zwischen jedem Stützbügel (3) und dem Linsentragaufbau (2) liegen, um die Verbindung zwischen denselben sicherzustellen,
**dadurch gekennzeichnet, dass** die Verbindungsmittel (8) für jeden Stützbügel (3) umfassen:
- mindestens einen Anlenkbolzen (9), der fest an einem unter dem Linsentragaufbau (2) und dem Stützbügel (3) angebracht ist;
- mindestens eine Anlenkaufnahme (10) für den Dreheingriff des Anlenkbolzens (9), welcher Sitz durch einen ersten, im anderen unter dem Linsentragaufbau (2) und dem Stützbügel (3) ausgenommenen Eingreifabschnitt (10a) und einen zweiten Eingriffabschnitt (10b) ausgenommen ist, der in einem Abdeckglied (11) ausgenommen ist, das dem anderen und dem Linsentragaufbau (2) und dem Stützbügel (3) zuzuordnen ist.

2. Brillenfassung nach Anspruch 1, bei der jeder Anlenkbolzen (9) dem Linsentragaufbau (2) zugeordnet ist und der erste Eingriffsabschnitt (10a) einer jeder Anlenkaufnahme (2) im entsprechenden Stützbügel (3) ausgenommen ist.

3. Brillenfassung nach Anspruch 2, bei der jeder Anlenkbolzen (9) von einem durch einen ersten Endabschnitt (7b) des Linsentragaufbaus (2) getragenen Kopplungsvorsprung (7a) hervorragt und der erste Eingriffsabschnitt (10a) einer jeden Anlenkaufnahme (10) in einer Vertiefung (12) ausgenommen ist, die im entsprechenden Stützbügel (3) zur Aufnahme des Abdeckgliedes (11) festgelegt ist.

4. Brillenfassung nach Anspruch 3, bei der in jedem Stützbügel (3) die Vertiefung (11) durch eine durchgehende Öffnung festgelegt ist und der erste Eingriffsabschnitt (10a) in einem Bund ausgenommen ist, der in die durchgehende Öffnung gemäß einer Ebene ragt, die im wesentlichen zur Längsabwicklung des entsprechenden Stützbügels (3) parallel ist.

5. Brillenfassung nach Anspruch 2, bei der jeder Anlenkbolzen (9) von mindestens einer Innenwand einer im Linsentragaufbau (2) ausgenommenen Aussparung (7c) ragt und der erste Eingriffsabschnitt (10b) der entsprechenden Anlenkaufnahme (10) in einer Berührungsfläche (14a) eines Kupplungsvorsprunges (14) ausgenommen ist, der endseitig vom entsprechenden Stützbügel (3) getragen wird, wobei die Berührungsfläche (14a) des Kupplungsvorsprunges (14) sich auf der Fortsetzung einer Grundwand (12a) einer Vertiefung (12) erstreckt, die im Stützbügel (3) zum Ergreifen des Abdeckgliedes (11) ausgenommen ist.

6. Brillenfassung nach Anspruch 1, bei der jeder Anlenkbolzen (9) dem entsprechenden Stützbügel (3) zugeordnet ist und der erste Eingriffsabschnitt (10a) einer jeden Anlenkaufnahme (10) im Linsentragaufbau (2) ausgenommen ist.

7. Brillenfassung nach Anspruch 6, bei der jeder Anlenkbolzen (9) außen von einem Kupplungsvorsprung (14) vorspringt, der in einem Endabschnitt (3a) des entsprechenden Stützbügels (3) angeordnet ist und der erste Eingriffsabschnitt (10a) einer jeden Anlenkaufnahme (10) in einer Vertiefung (12) ausgenommen ist, die im Linsentragaufbau (2) zur Aufnahme des Abdeckgliedes (11) festgelegt ist.

8. Brillenfassung nach Anspruch 7, bei der jede Vertiefung (12) durch mindestens eine durchgehende Öffnung festgelegt ist und der erste Eingriffsabschnitt (10a) der Anlenkaufnahme (10) in einem Bund (12b) ausgenommen ist, der in die durchgehende Öffnung gemäß einer Ebene vorspringt, die zur Längsabwicklung des entsprechenden Stützbügels (3) in Offenstellung parallel ist.

9. Brillenfassung nach Anspruch 10, bei der jeder Anlenkbolzen (9) von mindestens einer Innenwand einer im Stützbügel (3) ausgenommenen Aussparung vorspringt, und der erste Eingriffsabschnitt (10b) der entsprechenden Anlenkaufnahme (10) in einer Berührungsfläche (14a) eines Kupplungsvorsprunges (14) ausgenommen ist, der einseitig durch den Linsentragaufbau (2) getragen wird, wobei die Berührungsfläche (14a) des Kupplungsvorsprunges (14) sich auf der Fortsetzung einer Grundwand (12a) einer Vertiefung (12) vorspringt, die im Linsentragaufbau (2) zum erfassen des Abdeckgliedes (11) ausgenommen ist.

10. Brillenfassung nach Anspruch 1, bei welcher der erste Eingriffsabschnitt (10a) im Bereich einer Vertiefung (12) ausgenommen ist, die im anderen und dem Linsentragaufbau (2) und dem Stützbügel (3) bereitgestellt ist, um das Abdeckglied (11) aufzunehmen.

11. Brillenfassung nach Anspruch 10, bei der der erste Eingriffsabschnitt (10a) in einem Bund (12b) ausgenommen ist, der innerhalb der Vertiefung (12) gemäß einer im wesentlichen zum Stützbügel (3) in Offenstellung senkrechten Ebene festgelegt ist, wobei der zweite Eingriffsabschnitt (10b) an einem umlaufenden Rand (11a) des Abdeckgliedes (11) ausgenommen ist.

12. Brillenfassung nach Anspruch 10, bei welcher der erste Eingriffsabschnitt (10a) in einer Berührungsfläche (14a) eines Kupplungsvorsprunges (14) ausgenommen ist, der sich gemäß einer im wesentlichen zum Stützbügel (3) in Offenstellung parallelen Ebene auf der Fortsetzung einer Grundwand (12a) der Vertiefung (12) erstreckt, wobei der zweite Eingriffsabschnitt (10a) auf einer Innenseite (11b) des zur Grundwand (12a) gerichteten Abdeckgliedes (11) ausgenommen ist.

13. Brillenfassung nach Anspruch 10, bei welcher der erste Eingriffsabschnitt (10a) in einem Bund (12b) ausgenommen ist, der innerhalb der Vertiefung (12) gemäß einer im wesentlichen zum Stützbügel (3) in Offenstellung parallelen Ebene festgelegt ist, wobei der Eingriffabschnitt (10b) an einem Seitenrand (18, 19) des Abdeckgliedes (11) ausgenommen ist.

14. Brillenfassung nach Anspruch 1, bei welcher der erste Eingriffsabschnitt (10a) im anderen unter dem Linsentragaufbau (2) und dem Stützbügel (3) eine Hinterschneidung für das stabile Ergreifen des Anlenkbolzens (9) festlegt, sobald sich der entsprechende Stützbügel (3) in Offenstellung befindet.

## Revendications

1. Monture de lunettes comprenant:
- une structure porte-verres (2);
- deux branches de support (2) en engagement avec la structure porte-verres (2) et mobiles entre une condition fermée à laquelle elles sont disposées dans.un plan essentiellement parallèle au plan de disposition de la structure porte-verres (2) et une condition ouverte à laquelle elles sont disposées dans des plans essentiellement perpendiculaires au plan de disposition de la structure porte-verres (2);
- des moyens de liaison (8) interposés de manière opérationnelle entre chaque branche de support (3) et la structure porte-verres (2) pour assurer une jonction entre celles-ci;
**caractérisée en ce que** les moyens de liaison (8) pour chaque branche de support (3) comportent:
- au moins un pivot d'articulation (9) monté rigidement à l'une des deux pièces: structure porte-verres (2) et branche de support (3);
- au moins un siège d'articulation (10) pour l'engagement à pivotement du pivot de charnière (9), ce siège étant défini par une première portion d'engagement (10a) formée dans l'autre desdites structure porte-verres (2) et branche de support (3) et une deuxième portion d'engagement (10b) formée dans un élément de couverture (11) à associer à ladite autre desdites structure porte-verres (2) et branche de support (3).

2. Monture de lunettes selon la revendication 1, dans laquelle chaque pivot de charnière (9) est associé à la structure porte-verres (2), et la première portion d'engagement (10a) de chaque siège d'articulation (2) est formée dans la branche de support (3) respective.

3. Monture de lunettes selon la revendication 2, dans laquelle chaque pivot de charnière (9) fait saillie à l'extérieur d'une patte d'accouplement (7a) portée par une portion terminale (7b) de la structure porte-verres (2), et la première portion d'engagement (10a) de chaque siège d'articulation (10) est formée dans un renfoncement (12) défini dans la branche de support respective (3) pour le logement de l'élément de couverture (11).

4. Monture de lunettes selon la revendication 3, dans laquelle dans chaque branche de support (3) le renfoncement (12) est défini par une ouverture de passage et la première portion d'engagement (10a) est formée dans un épaulement faisant saillie dans ladite ouverture de passage dans un plan essentiellement parallèle à l'extension longitudinale de la branche de support respective (3).

5. Monture de lunettes selon la revendication 2, dans laquelle chaque pivot de charnière (9) fait saillie d'au moins une paroi intérieure d'une échancrure (7c) formée dans la structure porte-verres (2), et la première portion d'engagement (10b) du siège d'articulation respectif (10) est formée dans une surface de contact (14a) d'une patte d'engagement (14) portée en bout par la branche de support correspondante (3), la surface de contact (14a) de la patte d'engagement (14) s'étendant dans l'extension d'une paroi de fond (12a) d'un renfoncement (12) formé dans la branche de support (3) pour l'engagement de l'élément de couverture (11).

6. Monture de lunettes selon la revendication 1, dans laquelle chaque pivot de charnière (9) est associé à la branche de support respective (3) et la première portion d'engagement (10a) de chaque siège d'articulation (10) est formée dans la structure porte-verres (2).

7. Monture de lunettes selon la revendication 6, dans laquelle chaque pivot de charnière (9) fait saillie à l'extérieur d'une patte d'engagement (14) disposée à la portion terminale (3a) de la branche de support .respective (3) et la première portion d'engagement (10a) de chaque siège d'articulation (10) est formée dans un renfoncement (12) défini dans la structure porte-verres (2) pour le logement de l'élément de couverture (11).

8. Monture de lunettes selon la revendication 7, dans laquelle chaque renfoncement (12) est défini par au moins une ouverture de passage et la première portion d'engagement (10a) du siège d'articulation (10) est formée dans un épaulement (12b) faisant saillie dans ladite ouverture de passage dans un plan essentiellement parallèle à l'extension longitudinale de la branche de support respective (3) en condition ouverte.

9. Monture de lunettes selon la revendication 6, dans laquelle chaque pivot de charnière (9) fait saillie d'au moins une paroi intérieure d'un renfoncement formé dans la branche de support (3) et la première portion d'engagement (10b) du siège d'articulation respectif (10) est formée dans une surface de contact (14a) d'une patte d'engagement (14) portée en bout par la structure porte-verres (2), la surface de contact (14a) de la patte d'engagement (14) s'étendant dans l'extension d'une paroi de fond (12a) du renfoncement (12) formé dans la structure porte-verres (2) pour l'engagement de l'élément de couverture (11).

10. Monture de lunettes selon la revendication 1, dans laquelle ladite première portion d'engagement (10a) est formée en correspondance avec un renfoncement (12) disposé dans ladite autre desdites structure porte-verres (2) et branche de support (3) pour loger l'élément de couverture (11).

11. Monture de lunettes selon la revendication 10, dans laquelle ladite première portion d'engagement (10a) est formée dans un épaulement (12b) défini dans ledit renfoncement (12) dans un plan essentiellement perpendiculaire à la branche de support (3) en condition ouverte, ladite deuxième portion d'engagement (10b) étant formée sur un bord périmétral (11a) de l'élément de couverture (11).

12. Monture de lunettes selon la revendication 10, dans laquelle ladite première portion d'engagement (10a) est formée dans une surface de contact (14a) d'une patte d'engagement (14) s'étendant dans un plan essentiellement parallèle à la branche de support (3) en condition ouverte, dans l'extension d'une paroi de fond (12) dudit renfoncement (12), ladite deuxième portion d'engagement (10a) étant formée sur un côté intérieur (11b) de l'élément de couverture (11) tourné vers ladite paroi de fond (12a).

13. Monture de lunettes selon la revendication 10, dans laquelle ladite première portion d'engagement (10a) est formée dans un épaulement (12b) défini dans ledit renfoncement (12) dans un plan essentiellement parallèle à la branche de support (3) en condition ouverte, ladite deuxième portion d'engagement (10b) étant formée sur un bord latéral (18, 19) de l'élément de couverture (11).

14. Monture de lunettes selon la revendication 1, dans laquelle ladite première portion d'engagement (10a) définit un creux dans ladite autre desdites structure porte-verres (2) et branche de support (3) pour un engagement stable du pivot de charnière (9) quand la branche de support respective (3) est en condition ouverte.
